# EUROPEAN PATENT APPLICATION

(11) **EP 4 737 252 A1**
(43) Date of publication of application: **06.05.2026**
(21) Application number: 24844573.6
(22) Date of filing: 02.07.2024
(51) Int. Cl.: B60W 50/14, B60W 50/16, B60Q 1/44, B60L 15/20, B60L 7/00

(54) **DRIVING FEEDBACK METHOD AND APPARATUS, AND VEHICLE-MOUNTED DEVICE**

(30) Priority: 25.07.2023 CN 202310922552
(71) Applicant: Shenzhen Yinwang Intelligent Technologies Co., Ltd., Shenzhen, Guangdong 518110 (CN)
(72) Inventor: XIAO, Moyuan, Shenzhen, Guangdong 518129 (CN); LIANG, Chen, Shenzhen, Guangdong 518129 (CN); WANG, Yan, Shenzhen, Guangdong 518129 (CN); ZHAO, Dengwei, Shenzhen, Guangdong 518129 (CN)
(74) Representative: MERH-IP Matias Erny Reichl Hoffmann Patentanwälte PartG mbB
(86) International application number: PCT/CN2024/103207
(87) International publication number: WO 2025/020879

(57) **Abstract**

A driving feedback method and apparatus, and a vehicle-mounted device are provided. The method includes: obtaining information about a pedal of a vehicle, where the information about the pedal includes information about an accelerator pedal and information about a brake pedal; and outputting vehicle status feedback information that matches at least one of the following: the information about the accelerator pedal and the information about the brake pedal, where the vehicle status feedback information indicates at least one of the following: a status of the accelerator pedal and a status of the brake pedal. The output vehicle status feedback information may be visual and/or auditory. When a driver is driving, visual and auditory feedback is provided, to distinguish between stepping on the accelerator pedal/stepping on the brake pedal by the driver, to distinguish between slow acceleration/fast acceleration of the vehicle, and distinguish between an energy input/an energy output of the vehicle. In this way, relationships between an operation, and auditory feedback and visual feedback are established for the driver.

## Description

This application claims priority to Chinese Patent Application No. 202310922552.7, filed on July 25, 2023 and entitled "DRIVING FEEDBACK METHOD AND APPARATUS, AND VEHICLE-MOUNTED DEVICE", which is incorporated herein by reference in its entirety.

### TECHNICAL FIELD

This application relates to the field of automobile technologies, and in particular, to a driving feedback method and apparatus, and a vehicle-mounted device.

### BACKGROUND

With development of electric vehicle technologies, electric vehicles are increasingly popular. After a driver changes from driving a fuel vehicle to driving an electric vehicle, driving inconvenience or even an accident is easily caused due to differences between pedal designs of the vehicles.

There is a kinetic energy recovery system in the electric vehicle. Therefore, when an accelerator pedal is released, but the accelerator pedal still has an opening degree, the electric vehicle is in a deceleration state. This is different from the fuel vehicle, which is in the deceleration state only when a brake pedal has an opening degree.

The foregoing differences between the electric vehicle and the fuel vehicle may result in poor driving feedback obtained by the driver when the driver drives the electric vehicle, and the driver easily mistakes the accelerator pedal for the brake pedal, which causes mistaken stepping on the accelerator pedal when braking is needed.

### SUMMARY

This application provides a driving feedback method and apparatus, and a vehicle-mounted device. According to the method, an operation of a driver on a pedal can be fed back, and relationships between an operation, and auditory feedback and visual feedback are established for the driver. This enables the driver to be quickly familiar with vehicle operation and control logic, and strengthen proactive awareness and memory, which reduces a probability of mistakenly stepping on a throttle, and improves driving safety.

According to a first aspect, this application provides a driving feedback method. The method includes: obtaining information about a pedal of a vehicle, where the information about the pedal includes information about an accelerator pedal and information about a brake pedal; and outputting vehicle status feedback information that matches at least one of the following: the information about the accelerator pedal and the information about the brake pedal, where the vehicle status feedback information indicates at least one of the following: a status of the accelerator pedal and a status of the brake pedal.

In this implementation, the information about the pedal of the vehicle in a driving process is obtained, and then the vehicle status feedback information that can indicate at least one of the status of the accelerator pedal and the status of the brake pedal is output. In this way, an operation of a driver on the pedal can be fed back, and relationships between an operation, and auditory feedback and visual feedback are established for the driver. This enables the driver to be quickly familiar with vehicle operation and control logic, and strengthen proactive awareness and memory, which reduces a probability of mistakenly stepping on a throttle, and improves driving safety.

In an implementation of this application, the information about the accelerator pedal includes a depth of stepping on the accelerator pedal, and the information about the brake pedal includes a depth of stepping on the brake pedal.

In an implementation of this application, outputting the vehicle status feedback information that matches at least one of the following: the information about the accelerator pedal and the information about the brake pedal includes the following several cases.

In a first case, when the depth of stepping on the accelerator pedal is greater than 0, and neither a traveling speed of the vehicle nor the depth of stepping on the accelerator pedal exceeds a corresponding threshold, first indication information is output, where the first indication information indicates that the accelerator pedal is in a power output state.

The first case is a case in which the driver steps on the accelerator pedal and a stepping speed is slow, or a case in which the traveling speed of the vehicle is slow.

In a second case, when at least one of a traveling speed of the vehicle and the depth of stepping on the accelerator pedal exceeds a corresponding threshold, second indication information is output, where the second indication information indicates that the accelerator pedal is in a high-power driving state.

The second case is that an output power of the vehicle is high, and is represented as a case in which a vehicle speed is fast or the depth of stepping on the accelerator pedal of the vehicle is large. The traveling speed of the vehicle is obtained from a vehicle speed sensor in the vehicle. The second case familiarizes the driver with a cockpit feedback picture provided when the vehicle performs a high-power output. During normal driving, the cockpit feedback picture is driving feedback. For an operation of mistakenly stepping on the throttle, the cockpit feedback picture achieves a prompt function.

In the second case, the thresholds may be set in a plurality of manners, for example, the following manners.

In a first manner, the thresholds are fixed values. For example, the corresponding threshold of the traveling speed of the vehicle is set to 110 kilometers per hour (kilometer/hour, km/h), and the corresponding threshold of the depth of stepping on the accelerator pedal is set to 75% of a maximum depth of the accelerator pedal or the depth that is of the pedal and that corresponds to 75% of a maximum vehicle power.

In a second manner, the thresholds adaptively change based on a driving record of the driver. In this way, a quantity of times that the driver triggers the second indication information every day is neither too many nor too few, which achieves effect of establishing driver's correct operation awareness through feedback.

For example, the manner may include: determining, based on historical data of the depth of stepping on the accelerator pedal of the vehicle and historical data of the traveling speed of the vehicle, the corresponding threshold of the traveling speed of the vehicle and the corresponding threshold of the depth of stepping on the accelerator pedal, to cause a quantity of times of outputting the second indication information in each period to be within a preset quantity range of times.

The historical data of the depth of stepping on the accelerator pedal of the vehicle and the historical data of the traveling speed of the vehicle are data periodically collected and stored in a driving process of the vehicle. The data may be time-sensitive, for example, one week or one month.

When the threshold is determined based on the foregoing historical data, a threshold may be determined, to enable an average value of quantities of times that the second indication information is triggered in the period in data that corresponds to a historical record to be within the preset quantity range of times. The period may be every day, and the preset quantity range of times is, for example, greater than 0 and less than 3. The range is set to once or twice every day. For example, the threshold is adaptively determined, so that the second indication information is triggered once every day.

In the foregoing solution of adaptively determining the threshold, an adaptive threshold can be provided for each driver, so that the driver can basically trigger the second indication information for a specific quantity of times when driving every day, to match a driving habit of the driver. The second indication information is neither frequently triggered nor basically not triggered. In this way, the driver is familiar with a vehicle feedback system.

In a third case, when the depth of stepping on the accelerator pedal is decreased, third indication information is output, where the third indication information indicates that the accelerator pedal is in a state of deceleration due to kinetic energy recovery.

The third case is usually a case in which the driver releases the accelerator pedal, the depth of stepping on the accelerator pedal is reduced, the depth of stepping on the brake pedal is 0, and the vehicle performs kinetic energy recovery and deceleration.

In a fourth case, when the depth of stepping on the brake pedal is greater than 0, fourth indication information is output, where the fourth indication information indicates that the brake pedal is in a state of braking due to stepping on the brake pedal.

The fourth case is a case in which the driver steps on the brake pedal. As long as the brake pedal is stepped on, it is considered that the brake pedal is in this state. Usually, the fourth case occurs after the third case. That is, after the accelerator pedal is completely released, the vehicle automatically performs kinetic energy recovery based on a specified recovery power. In this case, the brake pedal is stepped on, and a kinetic energy recovery feedback picture and brake pedal feedback are synchronously provided.

In this implementation, the vehicle feeds back the foregoing several pieces of indication information, and driver's correct operation awareness is established through the feedback. This reduces a probability of mistakenly stepping on the throttle.

In some possible implementations of this application, the vehicle status feedback information indicates only one of the status of the accelerator pedal and the status of the brake pedal.

For example, an acceleration picture or sound is fed back when the accelerator pedal is stepped on, a kinetic energy recovery picture or sound is fed back when the accelerator pedal is released, and a brake picture or sound is fed back when the brake pedal is stepped on. The driver can distinguish between different working conditions by using different pictures or sounds, which avoids a problem in a related technology that it is difficult for the driver to distinguish between two working conditions: releasing the throttle to decelerate and lightly stepping on the brake to decelerate.

In some other possible implementations of this application, the vehicle status feedback information indicates the status of the accelerator pedal and the status of the brake pedal.

In this implementation, the vehicle status feedback information indicates the statuses of both of the two pedals, so that the driver can more intuitively determine stepping statuses of the pedals, and the relationships between an operation, and auditory feedback and visual feedback can be better established, which prevents the accelerator pedal from being mistakenly stepped on.

In an implementation of this application, the vehicle status feedback information includes visual feedback information. The visual feedback information includes a text, an icon, an animation, and the like.

When the icon is used as the visual feedback information, fewer resources are occupied, and an icon form can help the driver establish the relationship between an operation and visual feedback.

When the icon is used as the visual feedback information, the vehicle status feedback information may include one or more icons.

For example, the vehicle status feedback information includes an acceleration feedback icon, a kinetic energy recovery feedback icon, and a brake feedback icon.

The acceleration feedback icon indicates whether the status of the accelerator pedal is the power output state or the high-power driving state.

The kinetic energy recovery feedback icon indicates whether the status of the accelerator pedal is the state of deceleration due to kinetic energy recovery.

The brake feedback icon indicates whether the status of the accelerator pedal is the state of braking due to stepping on the brake pedal.

In this implementation, different icons are used to reflect whether the pedal is in different states, which can provide intuitive feedback for the driver.

In an example, the acceleration feedback icon, the kinetic energy recovery feedback icon, and the brake feedback icon are respectively an acceleration feedback bar, a kinetic energy recovery feedback bar, and a brake feedback bar.

In the power output state, a length of the acceleration feedback bar is greater than 0, and the length of the acceleration feedback bar corresponds to the depth of the accelerator pedal. A length of the kinetic energy recovery feedback bar and that of the brake feedback bar are both 0.

In the high-power driving state, the length of the acceleration feedback bar is greater than 0, the length of the acceleration feedback bar corresponds to the depth of the accelerator pedal, and the acceleration feedback bar has an identifier indicating emergency acceleration. The length of the kinetic energy recovery feedback bar and that of the brake feedback bar are both 0.

In the state of deceleration due to kinetic energy recovery, the length of the kinetic energy recovery feedback bar is greater than 0, and the length of the kinetic energy recovery feedback bar corresponds to strength of kinetic energy recovery. The length of the acceleration feedback bar and that of the brake feedback bar are both 0.

In the state of braking due to stepping on the brake pedal, the length of the brake feedback bar is greater than 0, and the length of the brake feedback bar corresponds to the depth of the brake pedal. The length of the kinetic energy recovery feedback bar is greater than or equal to 0, and the length of the kinetic energy recovery feedback bar corresponds to the strength of kinetic energy recovery. The length of the acceleration feedback bar is 0.

In the foregoing example, these icons can indicate the pedal status, and can also indicate content such as the depth of stepping on the pedal. This makes it easier for the driver to use the information as a reference during driving.

In another example, the acceleration feedback icon, the kinetic energy recovery feedback icon, and the brake feedback icon may also be in other shapes, for example, curve shapes or ring shapes.

In another example, the acceleration feedback icon, the kinetic energy recovery feedback icon, and the brake feedback icon may also be implemented in another manner. For example, different pattern variations are used for a same icon to distinguish between different states, or different colors are used for a same icon to distinguish between different states.

In an implementation of this application, the vehicle status feedback information includes auditory feedback information. The auditory feedback information includes voice, a simulated sound of a fuel vehicle, and the like.

The voice is voice for broadcasting the pedal status. The simulated sound of the fuel vehicle is a sound whose effect is the same as or similar to that of a sound inside the vehicle when a pedal of the fuel vehicle is in different states.

The vehicle status feedback information includes vehicle status feedback sounds that respectively correspond to different states of the accelerator pedal and different states of the brake pedal. The vehicle status feedback sound herein may be the foregoing voice or the simulated sound of the fuel vehicle.

In this implementation, the different vehicle status feedback sounds are used to reflect the different states of the pedal, which can provide intuitive status feedback for the driver.

In an example, the vehicle status feedback information includes one of the visual feedback information and the auditory feedback information.

In another example, the vehicle status feedback information includes both the visual feedback information and the auditory feedback information. Both the visual feedback information and the auditory feedback information are output to the driver, so that the driver can obtain more comprehensive feedback. This provides a condition of better establishing, for the driver, the relationships between an operation, and auditory feedback and visual feedback.

When the vehicle status feedback information includes the visual feedback information, the visual feedback information may be output through at least one of a central display screen and a dashboard screen.

When the vehicle includes a head-up display (head-up display, HUD), the visual feedback information may alternatively be output through the HUD.

For example, the acceleration feedback icon, the kinetic energy recovery feedback icon, and the brake feedback icon are output through at least one of the central display screen and the dashboard screen of the vehicle.

Optionally, the method further includes: when at least one of the traveling speed of the vehicle and the depth of stepping on the accelerator pedal exceeds the corresponding threshold, obtaining picture data on at least one of the central display screen and the dashboard screen, and storing the obtained picture data.

In this implementation, pictures on the central display screen and the dashboard screen are stored as evidence for clarifying mistaken stepping on the accelerator pedal in an unexpected case. In one aspect, compared with black box data in related technologies, the stored picture data can be directly played without being restored, and a picture that can be displayed is more intuitive. In another aspect, the picture is simple and vivid, making it easy to understand. In still another aspect, the driver establishes the relationship between an operation and visual feedback based on the vehicle status feedback information. Therefore, the driver is sufficiently familiar with the visual feedback information displayed on the central display screen and the dashboard screen, and the picture can improve credibility.

For example, the acceleration feedback icon, the kinetic energy recovery feedback icon, and the brake feedback icon are output through the HUD of the vehicle.

Optionally, the method further includes: when at least one of the traveling speed of the vehicle and the depth of stepping on the accelerator pedal exceeds the corresponding threshold, obtaining display data on the HUD, and saving the obtained display data, where the display data includes picture information and display setting information, and the display setting information includes at least one of a projection height, a projection angle, a projection distance, and projection brightness.

In this implementation, the HUD projects a virtual image, and there is no physical display for carrying the virtual image, and therefore the display data on the HUD is stored. The display data on the HUD can be restored through projection. In this way, a same function as that of the central display screen and that of the dashboard screen is achieved.

For example, when a picture on the HUD is restored, the stored display data on the HUD is directly imported into a vehicle-mounted HUD of a same model, to restore the picture on the HUD. The picture information in the display data is responsible for generating a picture, and the display setting information is responsible for controlling an angle, a height, a projection distance, and brightness during picture projection.

Optionally, the method may further include: when the traveling speed of the vehicle exceeds a speed limit value, controlling at least one of a backlight color and backlight brightness of at least one of the central display screen, the dashboard screen, and the HUD of the vehicle to be changed.

For example, the backlight color is changed from white to a more warning color such as yellow or red, or the backlight brightness is increased for a prompt.

In this implementation, when the traveling speed of the vehicle exceeds the speed limit value, the backlight color is changed and/or the backlight brightness is changed, to enhance warning effect. The speed limit value is greater than the corresponding threshold of the traveling speed of the vehicle, for example, is 120 km/h.

When the vehicle status feedback information includes the auditory feedback information, the auditory feedback information may be output through a speaker in the vehicle.

For example, the vehicle status feedback sound is output through the speaker in the vehicle.

Optionally, the method further includes: when at least one of the traveling speed of the vehicle and the depth of stepping on the accelerator pedal exceeds the corresponding threshold, recording a sound in the vehicle, and storing sound recording data.

In this implementation, the sound in the vehicle is recorded. The sound recording includes auditory feedback information in the high-power driving state, and can be used as evidence for clarifying mistaken stepping on the accelerator pedal in an unexpected case. In one aspect, compared with black box data in the related technologies, the stored sound recording data can be directly played without being restored, and a sound that can be displayed is more intuitive. In another aspect, the sound is simple and vivid, making it easy to understand. In still another aspect, the driver establishes the relationship between an operation and auditory feedback based on the vehicle status feedback information. Therefore, the driver is sufficiently familiar with the auditory feedback information in the sound recording, and the sound can improve credibility.

Optionally, the method further includes: when at least one of the traveling speed of the vehicle and the depth of stepping on the accelerator pedal exceeds the corresponding threshold, turning on an in-vehicle monitoring camera, and recording and storing a driver's operation and control picture. The driver's operation and control picture is recorded to provide a basis for subsequent driving scene restoration.

In an implementation of this application, operations such as recording a picture, information, and a sound are all started by using the vehicle speed and the depth of stepping on the accelerator pedal as conditions. Further, the recording operation may be ended and the recorded data may be processed in the following manners.

If the vehicle stops within 5 minutes after the recording starts, the recording ends when the vehicle stops. If a serious accident causes a power failure within 5 minutes after the recording starts, the recording ends at a moment before the power failure. If the vehicle does not stop, the recording is performed for 5 minutes, and then recorded data is deleted. After the recorded data is deleted, the system starts to check a condition that triggers recording next time.

Each time when the vehicle is restarted and the speed reaches more than 5 km/h, the recorded data is cleared, and detection of the condition that triggers recording next time is started. Alternatively, the vehicle periodically clears the recorded data.

In an autonomous driving scenario, when an autonomous driving system sends an alarm and requires the driver to take over the vehicle, recording operations such as screen recording/screenshot taking, data storing, in-vehicle monitoring camera turning on, and sound recording are also performed. For example, data within a period of time before and after the autonomous driving system requires the driver to take over the vehicle is recorded.

According to a second aspect, this application provides a driving feedback apparatus. The apparatus includes:
an obtaining unit, configured to obtain information about a pedal of a vehicle, where the information about the pedal includes information about an accelerator pedal and information about a brake pedal; and
an output unit, configured to output vehicle status feedback information that matches at least one of the following: the information about the accelerator pedal and the information about the brake pedal, where the vehicle status feedback information indicates at least one of the following: a status of the accelerator pedal and a status of the brake pedal.

Optionally, the information about the accelerator pedal includes a depth of stepping on the accelerator pedal, and the information about the brake pedal includes a depth of stepping on the brake pedal.

Optionally, the output unit is configured to:
when the depth of stepping on the accelerator pedal is greater than 0, and neither a traveling speed of the vehicle nor the depth of stepping on the accelerator pedal exceeds a corresponding threshold, output first indication information, where the first indication information indicates that the accelerator pedal is in a power output state; or
when at least one of a traveling speed of the vehicle and the depth of stepping on the accelerator pedal exceeds a corresponding threshold, output second indication information, where the second indication information indicates that the accelerator pedal is in a high-power driving state; or
when the depth of stepping on the accelerator pedal is decreased, output third indication information, where the third indication information indicates that the accelerator pedal is in a state of deceleration due to kinetic energy recovery; or
when the depth of stepping on the brake pedal is greater than 0, output fourth indication information, where the fourth indication information indicates that the brake pedal is in a state of braking due to stepping on the brake pedal.

Optionally, the apparatus further includes:
a determining unit, configured to determine, based on historical data of the depth of stepping on the accelerator pedal of the vehicle and historical data of the traveling speed of the vehicle, the corresponding threshold of the traveling speed of the vehicle and the corresponding threshold of the depth of stepping on the accelerator pedal, to cause a quantity of times of outputting the second indication information in each period to be within a preset quantity range of times.

Optionally, the vehicle status feedback information includes an acceleration feedback icon, a kinetic energy recovery feedback icon, and a brake feedback icon.

The acceleration feedback icon indicates whether the status of the accelerator pedal is the power output state or the high-power driving state.

The kinetic energy recovery feedback icon indicates whether the status of the accelerator pedal is the state of deceleration due to kinetic energy recovery.

The brake feedback icon indicates whether the status of the accelerator pedal is the state of braking due to stepping on the brake pedal.

Optionally, the output unit includes at least one of a central display screen and a dashboard screen of the vehicle.

Optionally, the apparatus further includes a first storage unit.

The obtaining unit is configured to: when at least one of the traveling speed of the vehicle and the depth of stepping on the accelerator pedal exceeds the corresponding threshold, obtain picture data on at least one of the central display screen and the dashboard screen.

The first storage unit is configured to store the obtained picture data.

Optionally, the output unit includes a head-up display HUD of the vehicle.

Optionally, the apparatus further includes a first storage unit.

The obtaining unit is configured to: when at least one of the traveling speed of the vehicle and the depth of stepping on the accelerator pedal exceeds the corresponding threshold, obtain display data on the HUD, where the display data includes picture information and display setting information, and the display setting information includes at least one of a projection height, a projection angle, a projection distance, and projection brightness.

The first storage unit is configured to store the obtained display data.

Optionally, the apparatus further includes:
a control unit, configured to: when the traveling speed of the vehicle exceeds a speed limit value, control at least one of a backlight color and backlight brightness of at least one of the central display screen, the dashboard screen, and the HUD of the vehicle to be changed.

Optionally, the vehicle status feedback information includes vehicle status feedback sounds that respectively correspond to different states of the accelerator pedal and different states of the brake pedal.

Optionally, the apparatus further includes a sound recording unit and a second storage unit.

The sound recording unit is configured to: when at least one of the traveling speed of the vehicle and the depth of stepping on the accelerator pedal exceeds the corresponding threshold, record a sound in the vehicle.

The second storage unit is configured to store the sound recording data.

In an example, the first storage unit and the second storage unit may be a same storage unit. In another example, the first storage unit and the second storage unit may be different storage units.

Optionally, the apparatus further includes:
a monitoring unit, configured to: when at least one of the traveling speed of the vehicle and the depth of stepping on the accelerator pedal exceeds the corresponding threshold, turn on an in-vehicle monitoring camera, and record and store a driver's operation and control picture.

According to a third aspect, a vehicle-mounted device is provided. The vehicle-mounted device includes a processor, and the processor is coupled to a memory. The memory is configured to store a software program and a module. The processor runs or executes the software program and/or the module stored in the memory, to implement the method according to the first aspect or any possible implementation of the first aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a fourth aspect, a computer program product is provided. The computer program product includes computer program code. When the computer program code is run by a computer, the computer is enabled to perform the method according to the first aspect or any possible implementation of the first aspect.

According to a fifth aspect, this application provides a computer-readable storage medium. The computer-readable storage medium is configured to store program code executed by a processor, and the program code is used to implement the method according to any possible implementation of the first aspect.

According to a sixth aspect, a chip is provided, including a processor. The processor is configured to invoke, from a memory, and run instructions stored in the memory, to enable a vehicle-mounted device in which the chip is mounted to perform the method according to any possible implementation of the first aspect.

According to a seventh aspect, another chip is provided. The another chip includes an input interface, an output interface, a processor, and a memory. The input interface, the output interface, the processor, and the memory are connected through an internal connection path. The processor is configured to execute code in the memory. When the code is executed, the processor is configured to perform the method according to any possible implementation of the first aspect.

According to an eighth aspect, a vehicle is provided. The vehicle includes the apparatus according to the second aspect or any possible implementation of the second aspect.

It should be understood that, for beneficial effects achieved by the technical solutions of the second aspect to the eighth aspect and the corresponding possible implementations of the technical solutions of the second aspect to the eighth aspect of this application, refer to the technical effects of the first aspect and the corresponding possible implementations of the first aspect. Details are not described herein again.

### BRIEF DESCRIPTION OF DRAWINGS

FIG. 1 is a schematic flowchart of a driving feedback method according to an embodiment of this application;
FIG. 2 is a schematic flowchart of a driving feedback method according to an embodiment of this application;
FIG. 3 is a diagram of transmitting a signal of a depth of stepping on a pedal according to an embodiment of this application;
FIG. 4 is a diagram of a brake feedback icon according to an embodiment of this application;
FIG. 5 is a diagram of obtaining picture data according to an embodiment of this application;
FIG. 6 is a schematic flowchart of a driving feedback method according to an embodiment of this application;
FIG. 7 is a block diagram of a driving feedback apparatus according to an embodiment of this application; and
FIG. 8 is a diagram of a structure of a vehicle-mounted device according to an embodiment of this application.

### DESCRIPTION OF EMBODIMENTS

To make the objectives, technical solutions, and advantages of this application clearer, the following further describes the implementations of this application in detail with reference to the accompanying drawings.

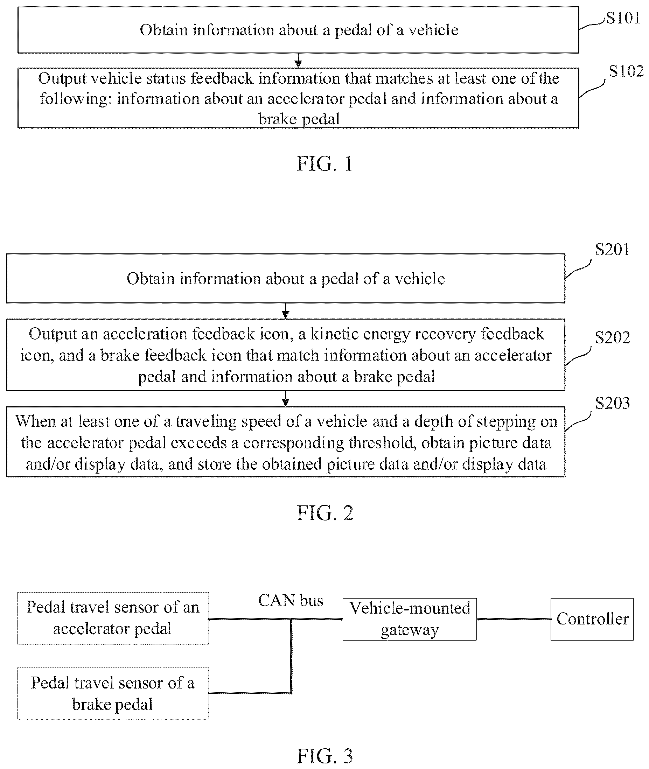

FIG. 1 is a schematic flowchart of a driving feedback method according to an embodiment of this application. The method may be performed by a controller of a vehicle, for example, by a head unit controller of the vehicle, or by a display controller, a HUD controller, and/or an audio controller of the vehicle. Refer to FIG. 1. The method may include the following steps.

S101: Obtain information about a pedal of a vehicle.

The information about the pedal includes information about an accelerator pedal (that is, a throttle pedal) and information about a brake pedal.

S102: Output vehicle status feedback information that matches at least one of the following: the information about the accelerator pedal and the information about the brake pedal.

The vehicle status feedback information indicates at least one of the following: a status of the accelerator pedal and a status of the brake pedal.

In this implementation, the information about the pedal of the vehicle in a driving process is obtained, and then the vehicle status feedback information that can indicate at least one of the status of the accelerator pedal and the status of the brake pedal is output. In this way, an operation of a driver on the pedal can be fed back, and relationships between an operation, and auditory feedback and visual feedback are established for the driver. This enables the driver to be quickly familiar with vehicle operation and control logic, and strengthen proactive awareness and memory, which reduces a probability of mistakenly stepping on a throttle, and improves driving safety.

In an implementation of this application, outputting the vehicle status feedback information that matches at least one of the following: the information about the accelerator pedal and the information about the brake pedal includes the following several cases.

In a first case, when a depth of stepping on the accelerator pedal is greater than 0, and neither a traveling speed of the vehicle nor the depth of stepping on the accelerator pedal exceeds a corresponding threshold, first indication information is output, where the first indication information indicates that the accelerator pedal is in a power output state.

The first case is a case in which the driver steps on the accelerator pedal and a stepping speed is slow, or a case in which the traveling speed of the vehicle is slow.

In this embodiment of this application, a depth of stepping on the pedal in a natural state is the smallest, and a minimum stepping depth is 0. As the driver steps on the pedal, the depth of stepping on the pedal is gradually increased. When the pedal is stepped on to the bottom, the depth of stepping on the pedal is the largest.

In a second case, when at least one of a traveling speed of the vehicle and a depth of stepping on the accelerator pedal exceeds a corresponding threshold, second indication information is output, where the second indication information indicates that the accelerator pedal is in a high-power driving state.

The high-power driving state means a case in which an acceleration of the vehicle is increased to a large value in a short time, and a danger is easily caused if mistaken stepping is performed. The high-power driving state is defined by using a speed threshold corresponding to the traveling speed of the vehicle and a depth threshold corresponding to the depth of stepping on the accelerator pedal.

The second case is that an output power of the vehicle is high, and is represented as a case in which a vehicle speed is fast or the depth of the accelerator pedal of the vehicle is large. The traveling speed of the vehicle is obtained from a vehicle speed sensor in the vehicle.

In the second case, there are requirements on both the traveling speed of the vehicle and the depth of stepping on the accelerator pedal. If only the speed meets the requirement, but the depth does not meet the requirement, the accelerator pedal is not in the high-power driving state. A main purpose of this state is to familiarize the driver with feedback of the vehicle during emergency acceleration. When the accelerator pedal is not mistakenly stepped on, a picture and/or a sound output in this state is normal operation feedback. When the accelerator pedal is really mistakenly stepped on, prompt effect is achieved.

In the second case, the thresholds may be set in a plurality of manners, for example, the following manners.

In a first manner, the thresholds are fixed values. For example, the corresponding threshold of the traveling speed of the vehicle is set to 110 km/h, and the corresponding threshold of the depth of stepping on the accelerator pedal is set to 75% of a maximum depth of the accelerator pedal or the depth that is of the pedal and that corresponds to 75% of a maximum vehicle power.

In a second manner, the thresholds adaptively change based on a driving record of the driver. In this way, a quantity of times that the driver triggers the second indication information every day is neither too many nor too few, which achieves effect of establishing driver's correct operation awareness through feedback.

For example, the manner may include: determining, based on historical data of the depth of stepping on the accelerator pedal of the vehicle and historical data of the traveling speed of the vehicle, the corresponding threshold of the traveling speed of the vehicle and the corresponding threshold of the depth of stepping on the accelerator pedal, to cause a quantity of times of outputting the second indication information in each period to be within a preset quantity range of times.

The historical data of the depth of stepping on the accelerator pedal of the vehicle and the historical data of the traveling speed of the vehicle are data periodically collected and stored in a driving process of the vehicle. The data may be time-sensitive, for example, one week or one month.

When the threshold is determined based on the foregoing historical data, a threshold may be determined, to enable an average value of quantities of times that the second indication information is triggered in the period in data that corresponds to a historical record to be within the preset quantity range of times. The period may be every day, and the preset quantity range of times is, for example, greater than 0 and less than 3. The range is set to once or twice every day. For example, the range is limited to once.

In the foregoing solution of adaptively determining the threshold, an adaptive threshold can be provided for each driver, so that the driver can basically trigger the second indication information for a specific quantity of times when driving every day, to match a driving habit of the driver. The second indication information is neither frequently triggered nor basically not triggered. In this way, the driver is familiar with a vehicle feedback system.

In a third case, when a depth of stepping on the accelerator pedal is decreased, third indication information is output, where the third indication information indicates that the accelerator pedal is in a state of deceleration due to kinetic energy recovery.

The third case is usually a case in which the driver releases the accelerator pedal, the depth of stepping on the accelerator pedal is reduced, a depth of stepping on the brake pedal is 0, and the vehicle performs kinetic energy recovery and deceleration. When the accelerator pedal is completely released, strength of kinetic energy recovery is the strongest.

In a fourth case, when a depth of stepping on the brake pedal is greater than 0, fourth indication information is output, where the fourth indication information indicates that the brake pedal is in a state of braking due to stepping on the brake pedal.

The fourth case is a case in which the driver steps on the brake pedal. As long as the brake pedal is stepped on, it is considered that the brake pedal is in this state. Usually, the fourth case occurs after the third case. That is, after the accelerator pedal is completely released, the vehicle automatically performs kinetic energy recovery based on a specified recovery power. In this case, the brake pedal is stepped on, and a kinetic energy recovery feedback picture and brake pedal feedback are synchronously provided.

In some possible implementations of this application, the vehicle status feedback information indicates only one of the status of the accelerator pedal and the status of the brake pedal.

For example, an acceleration picture or sound is fed back when the accelerator pedal is stepped on, a kinetic energy recovery picture or sound is fed back when the accelerator pedal is released, and a brake picture or sound is fed back when the brake pedal is stepped on. The driver can distinguish between different working conditions by using different pictures or sounds, which avoids a problem in a related technology that it is difficult for the driver to distinguish between two working conditions: releasing the throttle to decelerate and lightly stepping on the brake to decelerate.

Certainly, the foregoing four cases are merely examples. In another implementation, more or fewer cases may be included. For example, when more cases are included, a case corresponding to an out-of-control state due to a slippery road surface is further included.

In some other possible implementations of this application, the vehicle status feedback information indicates the status of the accelerator pedal and the status of the brake pedal.

In this implementation, the vehicle status feedback information indicates the statuses of both of the two pedals, so that the driver can more intuitively determine stepping statuses of the pedals, and the relationships between an operation, and auditory feedback and visual feedback can be better established, which prevents the accelerator pedal from being mistakenly stepped on.

In an implementation of this application, the vehicle status feedback information includes visual feedback information. The visual feedback information includes a text, an icon, an animation, and the like.

When the icon is used as the visual feedback information, fewer resources are occupied, and an icon form can help the driver establish the relationship between an operation and visual feedback.

When the icon is used as the visual feedback information, the vehicle status feedback information may include one or more icons.

For example, the vehicle status feedback information includes an acceleration feedback icon, a kinetic energy recovery feedback icon, and a brake feedback icon.

In an implementation of this application, the vehicle status feedback information includes auditory feedback information. The auditory feedback information includes voice, a simulated sound of a fuel vehicle, and the like.

The voice is voice for broadcasting the pedal status. The simulated sound of the fuel vehicle is a sound whose effect is the same as or similar to that of a sound inside the vehicle when a pedal of the fuel vehicle is in different states. For example, an engine roar sound, in the power output state, generated by an acceleration of the fuel vehicle is simulated, and a sound, in the state of braking due to stepping on the brake pedal, of the vehicle is simulated. A focus is to distinguish between an acceleration process and a deceleration process.

In an example, the vehicle status feedback information includes one of the visual feedback information and the auditory feedback information.

In another example, the vehicle status feedback information includes both the visual feedback information and the auditory feedback information. Both the visual feedback information and the auditory feedback information are output to the driver, so that the driver can obtain more comprehensive feedback, distinguish between stepping on the accelerator pedal/brake pedal, distinguish between an energy input (acceleration)/an energy output (kinetic energy recovery), and distinguish between slow acceleration/fast acceleration of the vehicle. This provides a condition of better establishing, for the driver, the relationships between an operation, and auditory feedback and visual feedback.

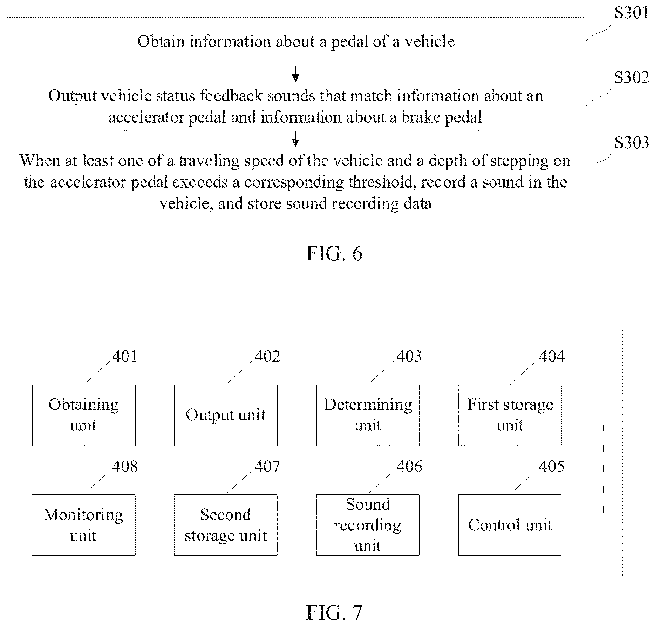

The following separately describes two implementations of outputting the visual feedback information and outputting the auditory feedback information with reference to FIG. 2 and FIG. 6.

FIG. 2 is a schematic flowchart of a driving feedback method according to an embodiment of this application. The method may be performed by a controller of a vehicle, for example, by a head unit controller of the vehicle, or by a display controller and/or a HUD controller of the vehicle. Refer to FIG. 2. The method may include the following steps.

S201: Obtain information about a pedal of the vehicle.

The information about the pedal includes information about an accelerator pedal and information about a brake pedal.

In an implementation of this application, the information about the accelerator pedal includes a depth of stepping on the accelerator pedal, and the information about the brake pedal includes a depth of stepping on the brake pedal.

The depth of stepping on the accelerator pedal and the depth of stepping on the brake pedal are respectively obtained from a pedal travel sensor of the accelerator pedal and a pedal travel sensor of the brake pedal. A traveling speed of the vehicle is obtained through calculation based on depths of stepping on the accelerator pedal that are obtained twice and a time interval.

For example, the controller obtains, through a controller local area network (controller area network, CAN) bus, signals captured by the two pedal travel sensors, to obtain the depth of stepping on the accelerator pedal and the depth of stepping on the brake pedal. The CAN bus may be a chassis CAN bus of the vehicle.

FIG. 3 is a diagram of transmitting a signal of a depth of stepping on a pedal according to an embodiment of this application. As shown in FIG. 3, the pedal travel sensor of the accelerator pedal and the pedal travel sensor of the brake pedal respectively send signals of the depth of stepping on a pedal to a vehicle gateway through the CAN bus, and then the vehicle gateway sends the signals of the depth of stepping on a pedal to the controller.

A manner of transmitting the signal of the depth of stepping on a pedal is highly secure. In addition, performance of the CAN bus can meet a requirement of a millisecond-level application due to a low latency. Therefore, a status of the pedal can be fed back in real time in a driving process, and speeds of providing visual feedback and auditory feedback are the same as those brought by a fuel vehicle.

S202: Output an acceleration feedback icon, a kinetic energy recovery feedback icon, and a brake feedback icon that match the information about the accelerator pedal and the information about the brake pedal.

The acceleration feedback icon indicates whether a status of the accelerator pedal is a power output state or a high-power driving state.

The kinetic energy recovery feedback icon indicates whether the status of the accelerator pedal is a state of deceleration due to kinetic energy recovery.

The brake feedback icon indicates whether the status of the accelerator pedal is a state of braking due to stepping on the brake pedal.

In this implementation, different icons are used to reflect whether the pedal is in different states, which can provide intuitive feedback for the driver.

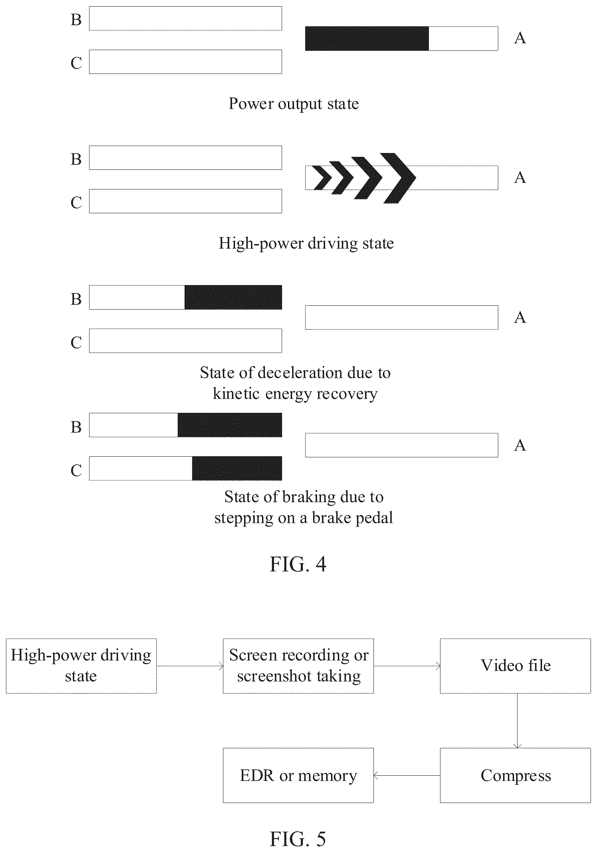

FIG. 4 is a diagram of the brake feedback icon according to an embodiment of this application. With reference to FIG. 4, the acceleration feedback icon, the kinetic energy recovery feedback icon, and the brake feedback icon are respectively an acceleration feedback bar A, a kinetic energy recovery feedback bar B, and a brake feedback bar C.

When a length (a black part) of the acceleration feedback bar A is 0, it indicates that the accelerator pedal is not in the power output state or the high-power driving state. When the length of the acceleration feedback bar A is greater than 0, and there is no identifier (an arrow identifier) indicating emergency acceleration, it indicates that the accelerator pedal is in the power output state. When the length of the acceleration feedback bar A is greater than 0, and there is the identifier indicating emergency acceleration, it indicates that the accelerator pedal is in the high-power driving state.

When a length (a black part) of the kinetic energy recovery feedback bar B is 0, it indicates that the accelerator pedal is not in the state of deceleration due to kinetic energy recovery. When the length of the kinetic energy recovery feedback bar B is greater than 0, it indicates that the accelerator pedal is in the state of deceleration due to kinetic energy recovery.

When a length (a black part) of the brake feedback bar C is 0, it indicates that the brake pedal is not in the state of braking due to stepping on the brake pedal. When the length of the brake feedback bar C is greater than 0, it indicates that the brake pedal is in the state of braking due to stepping on the brake pedal.

In the power output state, the length of the acceleration feedback bar is greater than 0, and the length of the acceleration feedback bar corresponds to the depth of the accelerator pedal. The length of the kinetic energy recovery feedback bar and that of the brake feedback bar are both 0.

In the high-power driving state, the length of the acceleration feedback bar is greater than 0, the length of the acceleration feedback bar corresponds to the depth of the accelerator pedal, and the acceleration feedback bar has an identifier indicating emergency acceleration. The length of the kinetic energy recovery feedback bar and that of the brake feedback bar are both 0.

In addition to feeding back the high-power driving state, the identifier indicating emergency acceleration in the figure may be used to feed back a high-speed state. For example, when a vehicle speed exceeds 120 km/h, the acceleration feedback bar also has the identifier.

In the state of deceleration due to kinetic energy recovery, the length of the kinetic energy recovery feedback bar is greater than 0, and the length of the kinetic energy recovery feedback bar corresponds to strength of kinetic energy recovery. The length of the acceleration feedback bar and that of the brake feedback bar are both 0.

Because the strength of kinetic energy recovery needs to be determined in the state of deceleration due to kinetic energy recovery, the method may further include: obtaining the strength of kinetic energy recovery. For example, the controller may obtain the strength of kinetic energy recovery from a motor control unit. A path for obtaining the strength of kinetic energy recovery may be the same as a path for obtaining the signal of the depth of stepping on a pedal. That is, the strength of kinetic energy recovery first passes through the CAN bus, and then is sent by the vehicle gateway to the controller. The transmission manner ensures signal security and a low latency.

In the state of braking due to stepping on the brake pedal, the length of the brake feedback bar is greater than 0, and the length of the brake feedback bar corresponds to the depth of the brake pedal. The length of the kinetic energy recovery feedback bar is greater than or equal to 0, and the length of the kinetic energy recovery feedback bar corresponds to the strength of kinetic energy recovery. The length of the acceleration feedback bar is 0.

In the foregoing example, these icons can indicate the pedal status, and can also indicate content such as the depth of stepping on the pedal. This makes it easier for the driver to use the information as a reference during driving.

In the implementation shown in FIG. 4, the kinetic energy recovery feedback bar B and the brake feedback bar C are disposed side by side, and the acceleration feedback bar A is separately disposed, so that the acceleration feedback bar A can be highlighted. In this way, the driver can better receive feedback of the power output state and feedback of the high-power driving state in the driving process.

In another implementation, the acceleration feedback bar A, the kinetic energy recovery feedback bar B, and the brake feedback bar C may also be disposed in another manner. For example, the acceleration feedback bar A, the kinetic energy recovery feedback bar B, and the brake feedback bar C may be disposed side by side, or locations of the acceleration feedback bar A and the brake feedback bar C in FIG. 4 are changed.

In another example, the acceleration feedback icon, the kinetic energy recovery feedback icon, and the brake feedback icon may also be in other shapes, for example, curve shapes or ring shapes.

In another example, the acceleration feedback icon, the kinetic energy recovery feedback icon, and the brake feedback icon may also be implemented in another manner. For example, different pattern variations are used for a same icon to distinguish between different states, or different colors are used for a same icon to distinguish between different states.

When the vehicle status feedback information includes the visual feedback information, the visual feedback information may be output through at least one of a central display screen and a dashboard screen.

For example, the acceleration feedback icon, the kinetic energy recovery feedback icon, and the brake feedback icon are output through at least one of the central display screen and the dashboard screen of the vehicle.

When the vehicle includes a head-up display (head-up display, HUD), the visual feedback information may alternatively be output through the HUD. A picture on the HUD can be most intuitively transmitted to the driver, and visual feedback effect is good.

For example, the acceleration feedback icon, the kinetic energy recovery feedback icon, and the brake feedback icon are output through the HUD of the vehicle.

The visual feedback information is output together with original content on the central display screen, dashboard screen, or HUD.

Optionally, a switch may be set for a function of outputting the visual feedback information through the HUD. That is, the method may further include: receiving a switch selection signal, and enabling or disabling, based on the switch selection signal, the function of outputting the visual feedback information through the HUD.

Optionally, when the function of outputting the visual feedback information through the HUD is disabled, in the high-power driving state, the visual feedback information is still output through the HUD of the vehicle, or a prompt is output through the HUD in another manner.

S203: When at least one of the traveling speed of the vehicle and the depth of stepping on the accelerator pedal exceeds a corresponding threshold, obtain picture data and/or display data, and store the obtained picture data and/or display data.

In a possible example, when at least one of the traveling speed of the vehicle and the depth of stepping on the accelerator pedal exceeds the corresponding threshold, picture data on at least one of the central display screen and the dashboard screen is obtained, and the obtained picture data is stored.

To be specific, when at least one of the traveling speed of the vehicle and the depth of stepping on the accelerator pedal exceeds the corresponding threshold, screen recording or screenshot taking is performed on the central display screen and/or the dashboard screen, to obtain the picture data of the at least one of the central display screen and the dashboard screen.

FIG. 5 is a diagram of obtaining the picture data according to an embodiment of this application. With reference to FIG. 5, in the high-power driving state in which the traveling speed of the vehicle exceeds a speed threshold, and/or the depth of stepping on the accelerator pedal exceeds a threshold, the screen recording or screenshot taking operation on the central display screen and/or the dashboard screen is triggered, to generate a common picture file or video file, for example, a moving picture experts group-4 (moving picture experts group-4, MP4) file. Screen recording or screenshot data is compressed, and stored in a vehicle-mounted event data record (event data record, EDR) (black box for short) system or a memory, to facilitate subsequent driving scene restoration. A point at which recording of the picture data ends may be that a vehicle has an obvious collision or a deceleration, which no longer meets speed and depth requirements of the accelerator pedal.

In this implementation, in addition to the visual feedback information displayed on the central display screen and/or the dashboard screen, the picture data obtained through screen recording or screenshot taking further includes vehicle parameter information, control information, and the like that are displayed on the central display screen and/or the dashboard screen.

In this implementation, pictures on the central display screen and the dashboard screen are stored as evidence for clarifying mistaken stepping on the accelerator pedal in an unexpected case. In one aspect, compared with black box data in related technologies, the stored picture data can be directly played without being restored, and a picture that can be displayed is more intuitive. In another aspect, the picture is simple and vivid, making it easy to understand. In still another aspect, the driver establishes a relationship between an operation and visual feedback based on the vehicle status feedback information. Therefore, the driver is sufficiently familiar with the visual feedback information displayed on the central display screen and the dashboard screen, and the picture can improve credibility.

Optionally, the method may further include: when the traveling speed of the vehicle exceeds a speed limit value, controlling at least one of a backlight color and backlight brightness of at least one of the central display screen, the dashboard screen, and the HUD of the vehicle to be changed.

In this implementation, when the traveling speed of the vehicle exceeds the speed limit value, the backlight color is changed and/or the backlight brightness is changed, to enhance warning effect. The speed limit value is greater than the corresponding threshold of the traveling speed of the vehicle, for example, is 120 km/h.

Optionally, the method may further include: when at least one of the traveling speed of the vehicle and the depth of stepping on the accelerator pedal exceeds the corresponding threshold, turning on an in-vehicle monitoring camera, and recording and storing a driver's operation and control picture. The operation and control picture is compressed, and stored in the EDR or memory. This provide a basis for subsequent driving scene restoration.

In another possible example, when at least one of the traveling speed of the vehicle and the depth of stepping on the accelerator pedal exceeds the corresponding threshold, display data on the HUD is obtained, and the obtained display data is saved, where the display data includes picture information and display setting information, and the display setting information includes at least one of a projection height, a projection angle, a projection distance, and projection brightness.

That is, when at least one of the traveling speed of the vehicle or the depth of stepping on the accelerator pedal exceeds the corresponding threshold, the display data on the HUD is stored, which facilitates subsequent restoration of the picture on the HUD.

In this implementation, in addition to the visual feedback information displayed on the HUD, picture information on the HUD further includes vehicle parameter information, control information, and the like that are displayed on the HUD.

The display data on the HUD may also be compressed and then stored in the EDR or memory.

The picture information included in the display data on the HUD is used to restore picture content. The display setting information included in the display data on the HUD is used to restore a height, brightness, a distance, an angle, and the like of a projected picture, to completely restore the picture on the HUD. The display data on the HUD can be read from a HUD driver.

When the picture on the HUD is restored, the stored display data on the HUD is directly imported into a vehicle-mounted HUD of a same model, to restore the picture on the HUD. The picture information in the display data is responsible for generating a picture, and the display setting information is responsible for controlling an angle, a height, a projection distance, and brightness during picture projection.

Optionally, the method further includes: when at least one of the traveling speed of the vehicle and depth of stepping on the accelerator pedal exceeds the corresponding threshold, recording intensity of light outside the vehicle through a brightness sensor. Subsequently, when the picture on the HUD is restored, the light outside the vehicle is simulated based on recorded light intensity. According to the foregoing technical means, subsequent faithful restoration of a picture on the HUD that is presented to the driver can be implemented.

In this implementation, the HUD projects a virtual image, and there is no physical display for carrying the virtual image, and therefore the display data (that is, drive data) on the HUD is stored. The display data on the HUD can be restored through projection. In this way, a same function as that of the central display screen and that of the dashboard screen is achieved.

The feedback visual information is stored as key data, which can directly restore the truth of the scene.

In an implementation of this application, recording operations are all started by using the vehicle speed and the depth of stepping on the accelerator pedal as conditions. Further, the recording operation may be ended and the recorded data may be processed in the following manners.

If the vehicle stops within 5 minutes after the recording starts, the recording ends when the vehicle stops. If a serious accident causes a power failure within 5 minutes after the recording starts, the recording ends at a moment before the power failure. If the vehicle does not stop, the recording is performed for 5 minutes, and then recorded data is deleted. After the recorded data is deleted, the system starts to check a condition that triggers recording next time.

Each time when the vehicle is restarted and the speed reaches more than 5 km/h, the recorded data is cleared, and detection of the condition that triggers recording next time is started. Alternatively, the vehicle periodically clears the recorded data.

For example, the method may further include: deleting the stored vehicle status feedback information and related information of the vehicle status feedback information, for example, deleting the picture data, the display data, the driver's operation and control picture, and the intensity of light outside the vehicle.

For example, a deletion manner may be scheduled deletion. For example, the data is stored for three days, and is deleted after the data expires. For another example, a deletion manner may be that data recorded during current driving is deleted when the vehicle reaches a specific speed next time, which can indicate that the vehicle is still normal.

The solution provided in this application is applicable to manual driving. In this case, the information about the pedal is real information of the pedal detected by a sensor. The solution provided in this application may also be applicable to autonomous driving. In this case, the information about the pedal is virtual information of the pedal obtained from an autonomous driving system. The screen recording/screenshot taking solution of the display picture provided in this application can also be used to restore an accident cause and a scene for a self-driving vehicle. Useful information can be presented on the screen through human-machine interaction in autonomous driving, and valid information can be retained through screen recording/screenshot taking. This can indicate that an intelligent cockpit of the vehicle indeed feeds back related information. When the vehicle is in an autonomous driving mode, rich prompt information may be displayed on the central display screen, the dashboard screen, or the HUD, and a decision reason for the vehicle to perform a related autonomous operation is displayed. In scenarios such as requiring the driver to take over the vehicle, display information within several minutes before and after a trigger condition may be saved in a timely, to restore the scene.

In an autonomous driving scenario, when the autonomous driving system sends an alarm and requires the driver to take over the vehicle, recording operations such as screen recording/screenshot taking, data storing, in-vehicle monitoring camera turning on, and sound recording are also performed. For example, data within a period of time before and after the autonomous driving system requires the driver to take over the vehicle is recorded.

FIG. 6 is a schematic flowchart of a driving feedback method according to an embodiment of this application. The method may be performed by a controller of a vehicle, for example, by a head unit controller of the vehicle, or by an audio controller of the vehicle. Refer to FIG. 6. The method may include the following steps.

S301: Obtain information about a pedal of the vehicle.

For this step, refer to step S201. Details are not described herein again.

S302: Output vehicle status feedback sounds that match information about an accelerator pedal and information about a brake pedal.

In this embodiment, vehicle status feedback information includes the vehicle status feedback sounds that respectively correspond to different states of the accelerator pedal and different states of the brake pedal. The vehicle status feedback sound herein may be the foregoing voice or the simulated sound of the fuel vehicle.

In this implementation, the different vehicle status feedback sounds are used to reflect the different states of the pedal, which can provide intuitive status feedback for the driver.

When the vehicle status feedback information includes auditory feedback information, the auditory feedback information may be output through a speaker in the vehicle.

For example, the vehicle status feedback sound is output through the speaker in the vehicle. The speaker in the vehicle can be a cockpit sound, and playing effect is good.

Optionally, a switch may be set for a function of outputting the auditory feedback information through the speaker. That is, the method may further include: receiving a switch selection signal, and enabling or disabling, based on the switch selection signal, the function of outputting the auditory feedback information through the speaker.

S303: When at least one of a traveling speed of the vehicle and a depth of stepping on the accelerator pedal exceeds a corresponding threshold, record a sound in the vehicle, and store sound recording data.

Optionally, the method further includes: when at least one of the traveling speed of the vehicle and the depth of stepping on the accelerator pedal exceeds the corresponding threshold, recording the sound in the vehicle, and storing the sound recording data.

For example, a cockpit ambient sound is recorded as the recording data through an in-vehicle microphone.

When at least one of the traveling speed of the vehicle and the depth of stepping on the accelerator pedal exceeds the corresponding threshold, recording is triggered to generate a common audio file, for example, an MP3 file. The recording data is compressed and stored in an EDR or a memory, to facilitate subsequent driving scene restoration.

Optionally, the method may further include: deleting the stored vehicle status feedback information and related information of the vehicle status feedback information, for example, deleting the recording data.

For example, a deletion manner may be scheduled deletion. For example, the data is stored for three days, and is deleted after the data expires. For another example, a deletion manner may be that data recorded during current driving is deleted when the vehicle reaches a specific speed next time, which can indicate that the vehicle is still normal.

In this implementation, the sound in the vehicle is recorded. The sound recording includes auditory feedback information in a high-power driving state, and can be used as evidence for clarifying mistaken stepping on the accelerator pedal in an unexpected case. In one aspect, compared with black box data in the related technologies, the stored sound recording data can be directly played without being restored, and a sound that can be displayed is more intuitive. In another aspect, the sound is simple and vivid, making it easy to understand. In still another aspect, the driver establishes a relationship between an operation and auditory feedback based on the vehicle status feedback information. Therefore, the driver is sufficiently familiar with the auditory feedback information in the sound recording, and the sound can improve credibility.

FIG. 7 is a block diagram of a driving feedback apparatus according to an embodiment of this application. The driving feedback apparatus may be implemented as all or a part of a controller of a vehicle by using software, hardware, or a combination thereof. The driving feedback apparatus may include an obtaining unit 401 and an output unit 402.

The obtaining unit 401 is configured to obtain information about a pedal of a vehicle, where the information about the pedal includes information about an accelerator pedal and information about a brake pedal.

The output unit 402 is configured to output vehicle status feedback information that matches at least one of the following: the information about the accelerator pedal and the information about the brake pedal, where the vehicle status feedback information indicates at least one of the following: a status of the accelerator pedal and a status of the brake pedal.

Optionally, the information about the accelerator pedal includes a depth of stepping on the accelerator pedal, and the information about the brake pedal includes a depth of stepping on the brake pedal.

Optionally, the output unit 402 is configured to:
when the depth of stepping on the accelerator pedal is greater than 0, and neither a traveling speed of the vehicle nor the depth of stepping on the accelerator pedal exceeds a corresponding threshold, output first indication information, where the first indication information indicates that the accelerator pedal is in a power output state; or
when at least one of a traveling speed of the vehicle and the depth of stepping on the accelerator pedal exceeds a corresponding threshold, output second indication information, where the second indication information indicates that the accelerator pedal is in a high-power driving state; or
when the depth of stepping on the accelerator pedal is decreased, output third indication information, where the third indication information indicates that the accelerator pedal is in a state of deceleration due to kinetic energy recovery; or
when the depth of stepping on the brake pedal is greater than 0, output fourth indication information, where the fourth indication information indicates that the brake pedal is in a state of braking due to stepping on the brake pedal.

Optionally, the apparatus further includes:
a determining unit 403, configured to determine, based on historical data of the depth of stepping on the accelerator pedal of the vehicle and historical data of the traveling speed of the vehicle, the corresponding threshold of the traveling speed of the vehicle and the corresponding threshold of the depth of stepping on the accelerator pedal, to cause a quantity of times of outputting the second indication information in each period to be within a preset quantity range of times.

Optionally, the vehicle status feedback information includes an acceleration feedback icon, a kinetic energy recovery feedback icon, and a brake feedback icon.

The acceleration feedback icon indicates whether the status of the accelerator pedal is the power output state or the high-power driving state.

The kinetic energy recovery feedback icon indicates whether the status of the accelerator pedal is a state of deceleration due to kinetic energy recovery.

The brake feedback icon indicates whether the status of the accelerator pedal is a state of braking due to stepping on the brake pedal.

Optionally, the output unit 402 includes at least one of a central display screen and a dashboard screen of the vehicle.

Optionally, the apparatus further includes a first storage unit 404.

The obtaining unit 401 is configured to: when at least one of the traveling speed of the vehicle and the depth of stepping on the accelerator pedal exceeds the corresponding threshold, obtain picture data on at least one of the central display screen and the dashboard screen.

The first storage unit 404 is configured to store the obtained picture data.

Optionally, the output unit 402 includes a head-up display HUD of the vehicle.

Optionally, the obtaining unit 401 is configured to: when at least one of the traveling speed of the vehicle and the depth of stepping on the accelerator pedal exceeds the corresponding threshold, obtain display data on the HUD, where the display data includes picture information and display setting information, and the display setting information includes at least one of a projection height, a projection angle, a projection distance, and projection brightness.

The first storage unit 404 is configured to store the obtained display data.

Optionally, the apparatus further includes:
a control unit 405, configured to: when the traveling speed of the vehicle exceeds a speed limit value, control at least one of a backlight color and backlight brightness of at least one of the central display screen, the dashboard screen, and the HUD of the vehicle to be changed.

Optionally, the vehicle status feedback information includes vehicle status feedback sounds that respectively correspond to different states of the accelerator pedal and different states of the brake pedal.

Optionally, the apparatus further includes a sound recording unit 406 and a second storage unit 407.

The sound recording unit 406 is configured to: when at least one of the traveling speed of the vehicle and the depth of stepping on the accelerator pedal exceeds the corresponding threshold, record a sound in the vehicle.

The second storage unit 407 is configured to store the sound recording data.

In an example, the first storage unit 404 and the second storage unit 407 may be a same storage unit. In another example, the first storage unit 406 and the second storage unit 407 may be different storage units.

Optionally, the apparatus further includes:
a monitoring unit 408, configured to: when at least one of the traveling speed of the vehicle and the depth of stepping on the accelerator pedal exceeds the corresponding threshold, turn on an in-vehicle monitoring camera, and record and store a driver's operation and control picture.

When the driving feedback apparatus provided in the foregoing embodiment works, division into the foregoing functional units is used merely as an example for illustration. During actual application, the foregoing functions may be allocated to different functional units and implemented based on a requirement. To be specific, an inner structure of a device is divided into different functional units, to implement all or some of the functions described above. In addition, the driving feedback apparatus provided in the foregoing embodiment and the driving feedback method embodiments belong to a same concept. For specific implementation processes thereof, refer to the method embodiments. Details are not described herein.

The descriptions of procedures corresponding to the foregoing accompanying drawings have respective focuses. For a part of a procedure that is not described in detail, refer to related descriptions of another procedure.

An embodiment of this application further provides a vehicle. The vehicle may include the driving feedback apparatus shown in FIG. 7.

Optionally, the vehicle further includes another component or system connected to the apparatus, for example, including a central display screen, a dashboard screen, a HUD, and a cockpit sound.

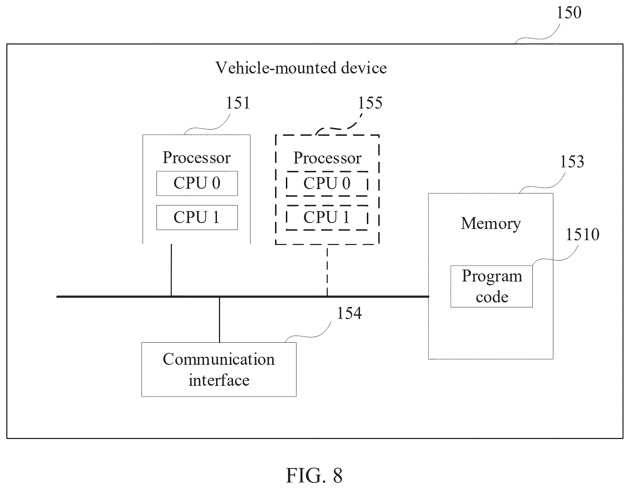

FIG. 8 is a diagram of a structure of a vehicle-mounted device 150 according to an embodiment of this application. The vehicle-mounted device 150 shown in FIG. 8 is configured to perform operations related to the driving feedback method shown in any one of FIG. 1 to FIG. 6. The vehicle-mounted device may include a controller of a vehicle. The vehicle-mounted device 150 may be implemented by using a general bus architecture.

As shown in FIG. 8, the vehicle-mounted device 150 includes at least one processor 151, a memory 153, and at least one communication interface 154.

The processor 151 is, for example, a general-purpose central processing unit (central processing unit, CPU), a digital signal processor (digital signal processor, DSP), a network processor (network processor, NP), a data processing unit (Data Processing Unit, DPU), a microprocessor, or one or more integrated circuits configured to implement the solutions of this application. For example, the processor 151 includes an application-specific integrated circuit (application-specific integrated circuit, ASIC), a programmable logic device (programmable logic device, PLD), or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor may implement or execute various logical blocks, modules, and circuits described in combination with the content disclosed in embodiments of this application. Alternatively, the processor may be a combination of processors implementing a computing function, for example, a combination of one or more microprocessors, or a combination of a DSP and a microprocessor.

Optionally, the vehicle-mounted device 150 further includes a bus. The bus is configured to transfer information between the components of the vehicle-mounted device 150. The bus may be a peripheral component interconnect (peripheral component interconnect, PCI for short) bus, an extended industry standard architecture (extended industry standard architecture, EISA for short) bus, or the like. Buses may be classified into an address bus, a data bus, a control bus, and the like. For ease of representation, only one bold line is used to represent the bus in FIG. 8, but this does not mean that there is only one bus or only one type of bus.

The memory 153 is, for example, a read-only memory (read-only memory, ROM) or another type of static storage device that can store static information and instructions, for another example, a random access memory (random access memory, RAM) or another type of dynamic storage device that can store information and instructions, for another example, an electrically erasable programmable read-only memory (electrically erasable programmable read-only Memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 153 exists independently, and is connected to the processor 151 through the bus. The memory 153 may alternatively be integrated with the processor 151.

The communication interface 154 uses any apparatus such as a transceiver, and is configured to communicate with another device or a communication network. The communication network may be an Ethernet, a radio access network (RAN), a wireless local area network (wireless local area network, WLAN), or the like. The communication interface 154 may include a wired communication interface, and may further include a wireless communication interface. Specifically, the communication interface 154 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 154 may be used by the vehicle-mounted device 150 to communicate with another device.

During specific implementation, in an embodiment, the processor 151 may include one or more CPUs, for example, a CPU 0 and a CPU 1 shown in FIG. 8. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the vehicle-mounted device 150 may include a plurality of processors, such as a processor 151 and a processor 155 shown in FIG. 8. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the vehicle-mounted device 150 may further include an output device and an input device. The output device communicates with the processor 151, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, or a projector (projector). The input device communicates with the processor 151, and may receive an input of a user in a plurality of manners. For example, the input device may be a mouse, a keyboard, a touchscreen device, or a sensing device.

In some embodiments, the memory 153 is configured to store program code 1510 for executing the solutions of this application, and the processor 151 may execute the program code 1510 stored in the memory 153. That is, the vehicle-mounted device 150 may execute the program code 1510 in the memory 153 by using the processor 151, to implement the methods provided in the method embodiments. The program code 1510 may include one or more software modules. Optionally, the processor 151 may also store program code or instructions for executing the solutions of this application.

In a specific embodiment, the vehicle-mounted device 150 in this embodiment of this application may correspond to the controller in the foregoing method embodiments. The processor 151 in the vehicle-mounted device 150 reads instructions in the memory 153, so that the vehicle-mounted device 150 shown in FIG. 8 can perform all or some operations performed by the controller.

Specifically, the processor 151 is configured to: obtain information about a pedal of a vehicle, where the information about the pedal includes information about an accelerator pedal and information about a brake pedal; and output vehicle status feedback information that matches at least one of the following: the information about the accelerator pedal and the information about the brake pedal, where the vehicle status feedback information indicates at least one of the following: a status of the accelerator pedal and a status of the brake pedal.

For brevity, another optional implementation is not described herein again.

Steps of the driving feedback method shown in any one of FIG. 1 to FIG. 6 are completed by using an integrated logic circuit of hardware or instructions in a form of software in the processor of the vehicle-mounted device 150. The steps of the method disclosed in combination with embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps of the foregoing methods in combination with the hardware of the processor. To avoid repetition, details are not described herein again.

An embodiment of this application further provides a chip, including an input interface, an output interface, a processor, and a memory. The input interface, the output interface, the processor, and the memory are connected through an internal connection path. The processor is configured to execute code in the memory. When the code is executed, the processor is configured to perform any one of the foregoing driving feedback methods.

It should be understood that the processor may be a CPU, or may be another general-purpose processor, a DSP, an ASIC, an FPGA, or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computer machines (advanced RISC machines, ARM) architecture.

Further, in an optional embodiment, there are one or more processors and one or more memories. Optionally, the memory and the processor may be integrated together, or the memory and the processor may be separately disposed. The memory may include a read-only memory and a random access memory, and provide instructions and data for the processor. The memory may further include a non-volatile random access memory. For example, the memory may further store a reference block and a target block.

The memory may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and is used as an external cache. By way of example but not limitative description, many forms of RAMs are available, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further provides a computer-readable storage medium. The computer-readable storage medium stores computer instructions. When the computer instructions stored in the computer-readable storage medium are executed by a vehicle-mounted device, the vehicle-mounted device is enabled to perform the driving feedback method provided above.

An embodiment of this application further provides a computer program product including instructions. When the computer program product is run on a vehicle-mounted device, the vehicle-mounted device is enabled to perform the driving feedback method provided above.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid-State Disk), or the like.

A person of ordinary skill in the art may understand that all or some of the steps of the embodiments may be implemented by hardware or a program instructing related hardware. The program may be stored in a computer-readable storage medium. The storage medium may be a read-only memory, a magnetic disk, an optical disc, or the like.

The foregoing descriptions are merely optional embodiments of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

Unless otherwise defined, a technical term or a scientific term used herein should have a general meaning understood by a person of ordinary skill in the art of this application. In the specification and claims of this application, terms such as "first", "second", and "third" do not indicate any order, quantity, or importance, but are merely used to distinguish different components. Likewise, "a/an", "one", or the like is not intended to indicate a quantity limitation either, but is intended to indicate existing at least one. Terms such as "include" and "comprise" mean that an element or object before the "include" or "comprise" encompasses elements or objects and their equivalents listed after the "include" or "comprise", and other elements or objects are not excluded.

The foregoing descriptions are merely an embodiment of this application, but are not intended to limit this application. Any modification, equivalent replacement, or improvement made within the principle of this application should fall within the protection scope of this application.

## Claims

1. A driving feedback method, wherein the method comprises:
obtaining information about a pedal of a vehicle, wherein the information about the pedal comprises information about an accelerator pedal and information about a brake pedal; and
outputting vehicle status feedback information that matches at least one of the following: the information about the accelerator pedal and the information about the brake pedal, wherein the vehicle status feedback information indicates at least one of the following: a status of the accelerator pedal and a status of the brake pedal.

2. The method according to claim 1, wherein the information about the accelerator pedal comprises a depth of stepping on the accelerator pedal, and the information about the brake pedal comprises a depth of stepping on the brake pedal.

3. The method according to claim 2, wherein outputting the vehicle status feedback information that matches at least one of the following: the information about the accelerator pedal and the information about the brake pedal comprises:
when the depth of stepping on the accelerator pedal is greater than 0, and neither a traveling speed of the vehicle nor the depth of stepping on the accelerator pedal exceeds a corresponding threshold, outputting first indication information, wherein the first indication information indicates that the accelerator pedal is in a power output state; or
when at least one of a traveling speed of the vehicle and the depth of stepping on the accelerator pedal exceeds a corresponding threshold, outputting second indication information, wherein the second indication information indicates that the accelerator pedal is in a high-power driving state; or
when the depth of stepping on the accelerator pedal is decreased, outputting third indication information, wherein the third indication information indicates that the accelerator pedal is in a state of deceleration due to kinetic energy recovery; or
when the depth of stepping on the brake pedal is greater than 0, outputting fourth indication information, wherein the fourth indication information indicates that the brake pedal is in a state of braking due to stepping on the brake pedal.

4. The method according to claim 3, wherein the method further comprises:
determining, based on historical data of the depth of stepping on the accelerator pedal of the vehicle and historical data of the traveling speed of the vehicle, the corresponding threshold of the traveling speed of the vehicle and the corresponding threshold of the depth of stepping on the accelerator pedal, to cause a quantity of times of outputting the second indication information in each period to be within a preset quantity range of times.

5. The method according to any one of claims 2 to 4, wherein the vehicle status feedback information comprises an acceleration feedback icon, a kinetic energy recovery feedback icon, and a brake feedback icon;
the acceleration feedback icon indicates whether the status of the accelerator pedal is the power output state or the high-power driving state;
the kinetic energy recovery feedback icon indicates whether the status of the accelerator pedal is the state of deceleration due to kinetic energy recovery; and
the brake feedback icon indicates whether the status of the accelerator pedal is the state of braking due to stepping on the brake pedal.

6. The method according to claim 5, wherein the acceleration feedback icon, the kinetic energy recovery feedback icon, and the brake feedback icon are output through at least one of a central display screen and a dashboard screen of the vehicle.

7. The method according to claim 6, wherein the method further comprises:
when at least one of the traveling speed of the vehicle and the depth of stepping on the accelerator pedal exceeds the corresponding threshold, obtaining picture data on at least one of the central display screen and the dashboard screen, and storing the obtained picture data.

8. The method according to claim 5, wherein the acceleration feedback icon, the kinetic energy recovery feedback icon, and the brake feedback icon are output through a head-up display HUD of the vehicle.

9. The method according to claim 8, wherein the method further comprises:
when at least one of the traveling speed of the vehicle and the depth of stepping on the accelerator pedal exceeds the corresponding threshold, obtaining display data on the HUD, and storing the obtained display data, wherein the display data comprises picture information and display setting information, and the display setting information comprises at least one of a projection height, a projection angle, a projection distance, and projection brightness.

10. The method according to any one of claims 6 to 9, wherein the method further comprises:
when the traveling speed of the vehicle exceeds a speed limit value, controlling at least one of a backlight color and backlight brightness of at least one of the central display screen, the dashboard screen, and the HUD of the vehicle to be changed.

11. The method according to any one of claims 2 to 10, wherein the vehicle status feedback information comprises vehicle status feedback sounds that respectively correspond to different states of the accelerator pedal and different states of the brake pedal.

12. The method according to claim 11, wherein the method further comprises:
when at least one of the traveling speed of the vehicle and the depth of stepping on the accelerator pedal exceeds the corresponding threshold, recording a sound in the vehicle, and storing sound recording data.

13. The method according to any one of claims 2 to 12, wherein the method further comprises:
when at least one of the traveling speed of the vehicle and the depth of stepping on the accelerator pedal exceeds the corresponding threshold, turning on an in-vehicle monitoring camera, and recording and storing a driver's operation and control picture.

14. A driving feedback apparatus, wherein the apparatus comprises:
an obtaining unit, configured to obtain information about a pedal of a vehicle, wherein the information about the pedal comprises information about an accelerator pedal and information about a brake pedal; and
an output unit, configured to output vehicle status feedback information that matches at least one of the following: the information about the accelerator pedal and the information about the brake pedal, wherein the vehicle status feedback information indicates at least one of the following: a status of the accelerator pedal and a status of the brake pedal.

15. The apparatus according to claim 14, wherein the information about the accelerator pedal comprises a depth of stepping on the accelerator pedal, and the information about the brake pedal comprises a depth of stepping on the brake pedal.

16. The apparatus according to claim 15, wherein the output unit is configured to:
when the depth of stepping on the accelerator pedal is greater than 0, and neither a traveling speed of the vehicle nor the depth of stepping on the accelerator pedal exceeds a corresponding threshold, output first indication information, wherein the first indication information indicates that the accelerator pedal is in a power output state; or
when at least one of a traveling speed of the vehicle and the depth of stepping on the accelerator pedal exceeds a corresponding threshold, output second indication information, wherein the second indication information indicates that the accelerator pedal is in a high-power driving state; or
when the depth of stepping on the accelerator pedal is decreased, output third indication information, wherein the third indication information indicates that the accelerator pedal is in a state of deceleration due to kinetic energy recovery; or
when the depth of stepping on the brake pedal is greater than 0, output fourth indication information, wherein the fourth indication information indicates that the brake pedal is in a state of braking due to stepping on the brake pedal.

17. The apparatus according to claim 16, wherein the apparatus further comprises:
a determining unit, configured to determine, based on historical data of the depth of stepping on the accelerator pedal of the vehicle and historical data of the traveling speed of the vehicle, the corresponding threshold of the traveling speed of the vehicle and the corresponding threshold of the depth of stepping on the accelerator pedal, to cause a quantity of times of outputting the second indication information in each period to be within a preset quantity range of times.

18. The apparatus according to any one of claims 15 to 17, wherein the vehicle status feedback information comprises an acceleration feedback icon, a kinetic energy recovery feedback icon, and a brake feedback icon;
the acceleration feedback icon indicates whether the status of the accelerator pedal is the power output state or the high-power driving state;
the kinetic energy recovery feedback icon indicates whether the status of the accelerator pedal is the state of deceleration due to kinetic energy recovery; and
the brake feedback icon indicates whether the status of the accelerator pedal is the state of braking due to stepping on the brake pedal.

19. The apparatus according to claim 18, wherein the output unit comprises at least one of a central display screen and a dashboard screen of the vehicle.

20. The apparatus according to claim 19, wherein the apparatus further comprises a first storage unit;
the obtaining unit is configured to: when at least one of the traveling speed of the vehicle and the depth of stepping on the accelerator pedal exceeds the corresponding threshold, obtain picture data on at least one of the central display screen and the dashboard screen; and
the first storage unit is configured to store the obtained picture data.

21. The apparatus according to claim 18, wherein the output unit comprises a head-up display HUD of the vehicle.

22. The apparatus according to claim 21, wherein the apparatus further comprises a first storage unit;
the obtaining unit is configured to: when at least one of the traveling speed of the vehicle and the depth of stepping on the accelerator pedal exceeds the corresponding threshold, obtain display data on the HUD, wherein the display data comprises picture information and display setting information, and the display setting information comprises at least one of a projection height, a projection angle, a projection distance, and projection brightness; and
the first storage unit is configured to store the obtained display data.

23. The apparatus according to any one of claims 19 to 22, wherein the apparatus further comprises:
a control unit, configured to: when the traveling speed of the vehicle exceeds a speed limit value, control at least one of a backlight color and backlight brightness of at least one of the central display screen, the dashboard screen, and the HUD of the vehicle to be changed.

24. The apparatus according to any one of claims 15 to 23, wherein the vehicle status feedback information comprises vehicle status feedback sounds that respectively correspond to different states of the accelerator pedal and different states of the brake pedal.

25. The apparatus according to claim 24, wherein the apparatus further comprises a sound recording unit and a second storage unit;
the sound recording unit is configured to: when at least one of the traveling speed of the vehicle and the depth of stepping on the accelerator pedal exceeds the corresponding threshold, record a sound in the vehicle; and
the second storage unit is configured to store the sound recording data.

26. The apparatus according to any one of claims 15 to 25, wherein the apparatus further comprises:
a monitoring unit, configured to: when at least one of the traveling speed of the vehicle and the depth of stepping on the accelerator pedal exceeds the corresponding threshold, turn on an in-vehicle monitoring camera, and record and store a driver's operation and control picture.

27. A vehicle-mounted device, wherein the vehicle-mounted device comprises a processor and a memory, the memory is configured to store a software program, and the processor runs or executes the software program stored in the memory, to enable the vehicle-mounted device to implement the method according to any one of claims 1 to 13.

28. A computer-readable storage medium, wherein the computer-readable storage medium is configured to store program code executed by a processor, and the program code comprises instructions used to implement the method according to any one of claims 1 to 13.

29. A computer program product, comprising program code, wherein when a computer runs the computer program product, the computer is enabled to perform the method according to any one of claims 1 to 13.

30. A vehicle, wherein the vehicle comprises the apparatus according to any one of claims 14 to 26.
